# EUROPEAN PATENT SPECIFICATION

(11) **EP 3 655 240 B1**
(45) Date of publication and mention of the grant of the patent: **03.03.2021**
(21) Application number: 18735596.1
(22) Date of filing: 10.07.2018
(51) Int. Cl.: B29C 70/58, B29C 70/62, B29C 71/02, B33Y 70/00, B33Y 10/00, B29C 64/118

(54) **HIDING OPTICAL DEFECT LINES ON PARTS OF FDM PRINTED LUMINAIRES WITH METALLIC LOOK**
VERSTECKEN OPTISCHER DEFEKTER LEITUNGEN AN TEILEN VON FDM-GEDRUCKTEN LEUCHTEN MIT METALLISCHEM AUSSEHEN
MASQUAGE DE LIGNES DE DÉFAUTS OPTIQUES OPACIFIANTES SUR DES PARTIES DE LUMINAIRES IMPRIMÉS PAR FDM À ASPECT MÉTALLIQUE

(30) Priority: 20.07.2017 EP 17182295
(43) Date of publication of application: 27.05.2020
(73) Proprietor: Signify Holding B.V., 5656 AE Eindhoven (NL)
(72) Inventor: KOOPMANS, Loes, Johanna, Mathilda, 5656 AE Eindhoven (NL); HIKMET, Rifat, Ata, Mustafa, 5656 AE Eindhoven (NL); GRUHLKE, Stefan, Willi, Julius, 5656 AE Eindhoven (NL)
(74) Representative: Verweij, Petronella Daniëlle
(86) International application number: PCT/EP2018/068602
(87) International publication number: WO 2019/016022

(56) References cited:
- WO-A1-99/14620
- WO-A1-2016/083797
- WO-A1-2017/080951
- US-A1- 2015 259 530

## Description

### FIELD OF THE INVENTION

The invention relates to a method for manufacturing a 3D item. The invention also relates to the 3D (printed) item obtainable with said method. Further, the invention relates to a lighting system including such 3D (printed) item. Yet further, the invention also relates to a 3D printable material (for use in such method).

### BACKGROUND OF THE INVENTION

The use of glitter in a matrix material is known in the art. US2001/0011779, for instance, describes methods and apparatuses for the manufacture of coextruded polymeric multilayer optical films. The multilayer optical films have an ordered arrangement of layers of two or more materials having particular layer thicknesses and a prescribed layer thickness gradient throughout the multilayer optical stack. The methods and apparatuses described allow improved control over individual layer thicknesses, layer thickness gradients, indices of refraction, interlayer adhesion, and surface characteristics of the optical films. The methods and apparatuses described are useful for making interference polarizers, mirrors, and colored films that are optically effective over diverse portions of the ultraviolet, visible, and infrared spectra.

WO 2016/083797 discloses a printed article and a method of manufacturing. The printed articles comprise a matrix forming material and a filler material which is dispersed within the matrix forming material. The filler material comprises glass flakes, having an aspect ratio of average diameter divided by average thickness greater than or equal to three.

US 2015/259530 discloses a polymeric material which includes a semi-crystalline polymer and a secondary material wherein when the secondary material is combined with the semi-crystalline polymer to form a blend having at least a 3° C reduction in a hot crystallization temperature relative to the neat semi-crystalline polymer.

WO2017080951 discloses a method for manufacturing a reflector by 3D printing according to the preamble of claim 1.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerizable material which is cured after each deposition to form a solid structure. While this technique produces smooth surfaces the photo curable materials are not very stable and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three dimensional object. FDM printers are relatively fast and can be used for printing complicated object.

FDM printers are relatively fast, low cost and can be used for printing complicated 3D objects. Such printers are used in printing various shapes using various polymers. The technique is also being further developed in the production of LED luminaires and lighting solutions.

Printing starts always by deposition of layers on a (flat) platform. The area printed on the platform can form the front decorative surface of an object, such as (an outer part of) a luminaire. Objects showing metallic appearance are highly appreciated. For this purpose, one can make use of polymers filled with plate like particles with a metallic appearance such as metal flakes. During the deposition using FDM printing a metallic appearance can be created. The metallic appearance may especially be the result of plate like particles getting substantially oriented with their largest surface parallel to the surface of the substrate during the deposition of the polymer. When such layers are placed next to each other in close packing (without air gap in between) on a substrate such as a flat substrate the printed item takes over the form of the surface of the substrate. For example when the layers are printed on a substrate where the temperature of the substrate is at around or above the glass transition temperature of the polymer. After printing the object can be released from the substrate to have a surface which was facing the substrate to be a replica of the substrate. In other words the surface of the object which was facing the substrate can essentially be as smooth as the substrate. However when polymers containing platelet-like additives are used optical defect lines start to appear in regions between the adjacent layers deposited next to each other. Such optical defect lines tend to disturb uniform metallic appearance of the surface.

It was surprisingly found that the visibility of the optical defect lines is very much related to the size of the metal particles. Hence, amongst others it is suggested using transparent polymer containing plate like particles with a metallic appearance having lateral dimensions of at least 40 µm, especially at least 100 µm for using FDM to obtain metallic appearance without optical defects upon printing on a flat surface.

In a first aspect the invention provides a method for manufacturing a reflector by 3D printing according to claim 1. The polymeric material is especially a thermoplastic material. By heating the substrate to a temperature of at least 5°C above the glass transition temperature, the surface of the 3D item that was in contact with the substrate is essentially a replica thereof. The substrate may be flat, curved, may include facets, may have surface roughness, etc.; this will be replicated in the outer layer of the 3D printed item (that was formerly in contact with the substrate during printing).

With such method it is possible to 3D print 3D printable material on a substrate, wherein the 3D printed material that forms a face that can be released from the substrate which is a replica of the substrate and contains no mechanical defect lines and may have a metallic appearance essentially without visibility of optical defect lines. Different sizes plate-shaped particles, which were disc (so called dollar flakes), more regular shaped flakes with straight edges, such a rectangular (flakes obtained by physical vapor deposition on a substrate followed by removal of the flakes from a carrier substrate), or otherwise flake shaped, were tested. When particles with lateral dimensions larger than about 100 µm were used the optical defect lines became substantially less visible. When particles with lateral dimensions above 200 µm were used optical defect lines totally disappeared. Hence, much smaller particles lead to the visibility of optical defect lines, which is not desirable. Particles equal to or larger than about 1 mm, such as especially equal to or larger than about 2 mm, may create other undesired effects, such as surface roughness of the deposited filaments, or less desirable surface appearance.

As indicated above, the invention thus provides a method comprising providing a filament of 3D printable material and printing during a printing stage said 3D printable material on a substrate, to provide the 3D item. Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polystyrene (PS), PE (such as expanded- high impact-Polythene (or polyethene), Low density (LDPE) High density (HDPE)), PVC (polyvinyl chloride) Polychloroethene, etcetera. Optionally, the 3D printable material comprises a 3D printable material selected from the group consisting of Urea formaldehyde, Polyester resin, Epoxy resin, Melamine formaldehyde, Polycarbonate (PC), rubber, etc. Optionally, the 3D printable material comprises a 3D printable material selected from the group consisting of a polysulfone, a polyether sulfone, a polyphenyl sulfone, an imide (such as a poly ether imide) etcetera. Especially, the printable material *per se* is light transmissive, more especially optically transparent. PPMA, PC, amorphous PET, PS and co-polyesters of two or more thereof are suitable polymers. Hence, especially polymeric materials may be applied that are at least partially transmissive for visible light. For instance, the polymeric material may be transparent to light (assuming the particles are not (yet) available).

Basically, (polymeric) materials may be applied that have a transmission for one or more wavelengths in the visible region of the spectrum of at least 70%/cm, such as at least 90%/cm, even more especially at least 95%/cm, such as at least 98%/cm, such as at least 99%/cm. (without the particles are not (yet) mixed into the polymer).

Herein, values for transmission especially refer to transmission without taking into account Fresnel losses at interfaces (with e.g. air). Hence, the term "transmission" especially refers to the internal transmission. The internal transmission may e.g. be determined by measuring the transmission of two or more bodies having different thicknesses over which the transmission is measured. Then, based on such measurements the contribution of Fresnel reflection losses and (consequently) the internal transmission can be determined. Hence, especially, the values for transmission indicated herein disregard Fresnel losses. Here, the term body refers to a piece of polymeric material, without the particles. The wavelength of interest especially refer to one or more wavelengths in the visible.

Herein, the term "visible light" especially relates to light having a wavelength selected from the range of 380-780 nm. The transmission can be determined by providing light at a specific wavelength with a first intensity to the light transmissive body under perpendicular radiation and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

Herein, the term "3D printable material" may also be indicated as "printable material. The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former.

Specific examples of materials that can be used are (essentially) transparent materials can e.g. be selected from the group consisting of, polycarbonate (PC), amorphous polyamides (PA), amorphous PET, polystyrene (PS), PET, PMMA, etc., and copolymers of two or more thereof (such as copolyesters). They may also contain dyes which may optionally be luminescent to obtain enhanced effects.

The printable material is especially printed on a receiver item. Especially, the receiver item can be the building platform or can be comprised by the building platform. The receiver item is temporarily heated during 3D printing. The receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etcetera. Instead of the term "receiver item" also the term "substrate" may be used. The phrase "printing on a receiver item" and similar phrases include amongst others *also* printing on a separate substrate on or comprised by a printing platform, a print bed, a support, a build plate, or a building platform, etcetera. Therefore, the phrase "printing on a substrate" and similar phrases include amongst others directly printing on the substrate, or printing on a coating on the substrate or printing on 3D printed material earlier printed on the substrate.

Here below, further the term substrate is used, which may refer to a printing platform, a print bed, a substrate, a support, a build plate, or a building platform, etc., or a separate substrate thereon or comprised thereby. See further also below were specific (separate) substrates are discussed. Instead of the term "printing" and similar terms, herein also the term "depositing" may be used.

During the printing stage said 3D printable material is deposited on the substrate (or receiver item). This leads to a first layer of adjacent printed filaments. Thereon, the remainder of the 3D item may be printed. The metallic appearance may be a result of plate like particles getting substantially oriented with their largest surface parallel to the surface of the substrate during the deposition of the polymer. Hence, in principle there may be a stage wherein the 3D printable material is directly printed on the substrate, and a stage wherein 3D printable material is printed on yet 3D printed material. Therefore, during at least part of the printing stage, especially the stage that is directly printed on the substrate, the 3D printable material comprises plate-like particles. In this way, the 3D item comprising 3D printed material with the plate-like particles is obtained. More especially, at least part of the 3D item, such as an outer part, comprises the particles. In order to obtain good replica of the surface of the substrate without and mechanical defects such as air inclusions and not completely merged printed polymers. Therefore, the 3D printed item will comprise an outer layer of light transmissive polymeric material including the particles, but the remainder of the 3D printed item may not necessarily comprise such particles, and also does not necessarily comprise light transmissive polymeric material. For instance, layer that are not deposited on the substrate, but over the first layer, may comprise essentially no particles, and the polymeric material may not be light transmissive.

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed.

The herein described method provides 3D printed items. Hence, the invention also provides in a further aspect a 3D printed reflector obtainable with the herein described method, according to claim 8.

Hence, the 3D printed material comprises a light transmissive thermoplastic material, such as e.g. one or more of the above-listed polymeric materials. Therefore, at least part of the 3D printed item may comprise light transmissive thermoplastic material with the particles as described herein embedded in the polymeric material.

According to the invention, the method comprises subjecting a first layer of the 3D printed material on the substrate to a temperature of at least 5 °C above the glass transition temperature (and below the melting temperature) during printing of the first layer or after printing of the first layer. Heating, of e.g. the substrate, may be terminated after the first layer has been deposited. However, heating may also be commenced after the 3D printed item is ready. By heating, the surface on the substrate is essentially mate conformal to the surface of the substrate, by which the characteristic ribbed structure of FDM printed objects is removed. Hence, heating may especially be a targeted heating of the essentially only the first layer (and a few layers above). Heating of the first layer is done by heating the substrate during at least part of the printing stage to a temperature of as at least 5 °C above the glass transition temperature, and especially at least 5 °C lower than the melting temperature (when the polymeric material has a melting temperature. Heating is executed until essentially the mechanical defect lines, due to the arrangement of the adjacent (former) filaments are essentially removed. Hence, is executed until essentially the deposited first layer is conformal with the substrate.

The method comprises heating the substrate to a temperature of at least 5 °C above the glass transition temperature. Heating of the substrate is executed to heat the first layer. In order to improve the replication results, the substrate is heated to a temperature of at least 5 °C above the glass transition temperature. More preferable, the substrate may be heated to a temperature of at least 10 °C above the glass transition temperature, or most preferably the substrate may be heated to a temperature of at least 12 °C above the glass transition temperature. Such heating steps will further improve the replication results. For example, polycarbonate has a Tg of 147 °C. Good replication results are obtained by heating the substrate to a temperature of 152 °C. A detector and control system can be used to control the temperature. For instance, a detector may detect deformation of the first layer. Hence, the control system may adapt the temperature in response to a sensor signal. Hence, a feedback system may be applied to heat the first layer, until the desired conformity with the substrate is achieved.

The plate-like particles have a metallic appearance. A metallic color is a color that appears to be that of a polished metal. Hence, the particles have a color that appears to be that of a polished metal. This maybe obtained with particles that e.g. consist of aluminum, silver, gold, indium, titanium, niobium, copper, or that have a coating of aluminum, silver, gold, indium, titanium, niobium, copper. Also some metal oxide coatings may provide a metallic appearance. Hence, the particles may in embodiments have an iridescent metallic sheen.

In embodiments, the particles comprise one or more of dollar like particles, flake-like particles, and particles with straight edges. Further, in embodiments the particles comprise one or more of metal particles and metal coated particles. Especially, metal coated particles may comprise silver or aluminum coated mica particles or glass particles.

The particles are herein indicated as plate-like particles, as the particles may be relatively thin. The lateral dimensions may be much larger than the thickness or height. Especially, the plate-like particles have a longest dimension length selected from the range of 40 µm - 2 mm, even more especially at least 50 µm, yet even more especially selected from the range of 100 µm - 1 mm. Further, especially the plate-like particles have a largest thickness selected from the range of 0.05-20 µm, yet even more especially selected from the range of 0.10-10 µm. With such dimensions the optical defect lines of the 3D printed surface that is (was) in contact with the substrate may be made substantially invisible.

In yet further embodiments, in addition to the particles described herein for their reflective function, the layer may also include other type of particles. The weight percentage of such particles in the layer is especially less than 20 wt%, such as less than 10 wt% in order to maintain the desired reflectivity.

As indicated above, the 3D printable material, and thus also the 3D printed material comprises particulate material. The particulate material comprises the mica particles and/or the glass particles. The particulate may be polydisperse.

As indicated above, the particles have an aspect ratio of especially at least 2, such as at least 5. However, even more especially the aspect ratio is at least 10, such as even more especially at least 20, like in the range of 10-10,000. This implies that there is a longest dimension, with has a longest dimension length, which has together with a thickness an aspect ratio (length/thickness) of at least 2, such as at least 5, especially at least 10.

Therefore, in embodiments particles are used which have a longest dimension (A1) having a longest dimension length (L1), and a minor axis (A2) having a minor axis length (L2), wherein the longest dimension length (L1) and the minor axis length (L2) have a first aspect ratio of at least 2, like in the range of 5-10,000. Especially, as indicated above, the aspect ratio is at least 10.

Especially, the aspect ratios indicated herein, or the dimensions, such as the longest dimension, etc., indicated herein, refer to an average over the total number of particles. Hence, the term "in average" especially refers to a number average. As indicated above, the particulate may be polydisperse.

Especially, the particles have a longest axis or longest dimension and a shortest axis or minor axis, which have an aspect ratio of at least 2, such as at least 5, such as in the range of 5-10,000, like even more especially at least 10, such as in the range of 10-10,000, like at least 20, such as in the range of 20-1,000.

The particles may have a flake-like structure, i.e. particles having a maximum width and a maximum length substantially larger than a maximum thickness, such as a first aspect ratio of the maximum length and maximum thickness of especially at least 2, like at least 5, such as at least 10, such as in the range of 10-10,000, and/or a second aspect ratio of the maximum width and the maximum height of especially at least 2, like at least 5, such as at least 10, such as in the range of 10-10,000. Hence, in embodiments the plate-like particles are flake-like particles.

The aspect ratios, as indicted above, refer to the particles including an optional coating of the particles. The phrase "coating of the particles" especially refers to a coating on an individual particle, i.e. a coating enclosing a single particle. Hence, also the term "particle coating" may be used. The coating may enclose the particle entirely or only a part of the particle. The particles of a subset of the total number of particles may include a particle coating and anther subset of the total number of particles may not include a particle coating. Further, the aspect ratios indicated above may refer to a plurality of particles having different aspect ratios. Hence, the particles may be substantially identical, but the particles in the coating may also mutually differ, such as two or more subsets of particles, wherein within the subsets the particles are substantially identical.

To define the longest dimension and the minor axis or minor axes for the particles, herein the axes of a (virtual) rectangular parallelepiped with the smallest volume that encloses the particle may be used. The main and minor axes are defined perpendicular to the faces of the rectangular parallelepiped, the longest dimension having a longest dimension length (L1), a minor axis with a minor axis length (L2) and another or further (orthogonal axis) having a further axis length (L3). Hence, the longest dimension may especially relate to a length of the particles, the minor axis may especially relate to a thickness or height of the particles, and the further axis may especially refer to a width of the particles. The longest dimension length and the further axis length may also be indicated as "lateral lengths" or "lateral dimensions".

Especially, L1>L2, further, especially L3>L2. The ratios given herein for L1/L2 may also apply to a ratio of L3/L2. L1 and L3 may be the same or may differ, but are in specific embodiments each individually especially at least 5 times larger than L2, such as at least 10 times larger than L2. Further, the dimensions herein given for the longest dimension length may thus also apply for the length of the further axis, though - as indicated above - the length of these axes may be chosen individually. With the definition of the virtual) rectangular parallelepiped, and the herein indicated dimensions, essentially flat particles, like flakes, are defined.

Therefore, in embodiments the longest dimension, the minor axis, and a further axis, define a rectangular parallelepiped with a smallest volume that encloses the particle, wherein the further axis has a further axis length (L3), wherein further axis length (L3) and the minor axis length (L2) have a second aspect ratio (L3/L2) of at least 5, such as at least 10.

Further, the particles may mutually differ. For instance, the particles may have a distribution of the sizes of one or more of the longest dimension, the minor axis (and the further axis). Therefore, in average, the particles will have dimensions as described herein. For instance, at least 50 wt% of the particles comply with the herein indicated dimensions (including ratios), such as at least 75 wt%, like at least 85 wt%. As known in the art, the particles may also have effective diameters indicated with d50. Such diameters may thus vary, as there may be a distribution of particle sizes.

Hence, in embodiments at least 50 wt% of the particles, such as at least 75 wt%, like at least 85 wt% has a longest dimension with a length (L1) selected from the indicated ranges. Yet further, in embodiments at least 50 wt% of the particles, such as at least 75 wt%, like at least 85 wt% has a minor axis length (L2) selected from the indicated ranges. Yet further, in embodiments at least 50 wt% of the particles, such as at least 75 wt%, like at least 85 wt% has a further axis with a further axis length (L3) selected from the indicated ranges.

In yet further embodiments, for at least 50 wt% of the particles, such as at least 75 wt%, like at least 85 wt%, apply all these conditions for L1, L2 and L3 for each particle (of the at least 50 wt%).

In specific embodiments, a mass median weight (or more) of the particles has a longest dimension with a length (L1) selected from the indicated ranges. In yet further specific embodiments, a mass median weight (or more) of the particles has a minor axis length (L2) selected from the indicated ranges. In further specific embodiments, a mass median weight (or more) of the particles has a further axis with a further axis length (L3) selected from the indicated ranges. In yet further embodiments, a mass median weight (or more) of the particles comply with all these conditions for L1, L2 and L3.

For particles that have a shape like a flake-like shape the longest dimension and further axis may essentially have the same dimensions, i.e. L1≈L3. The flakes, as mentioned herein, may have any shape. An example of particles with a high aspect ratio are cornflake particles. Cornflake particles are high aspect ratio flakes with ragged edges and a cornflake-like appearance. Cornflake particles may have aspect ratios in the range of 10 - 1.000. In specific embodiments, the particles may irregularly be shaped. In specific embodiments, the particles may comprise pieces of broken glass (having the herein defined dimensions).

There are also particles with round shapes such as oval or circular cross-sections. The other type of flakes (based on evaporation method) can have very well defined shapes such as a rectangle and have almost straight edges. However they may become wrinkled when the dimensions are large.

The particles can be mica particles or glass particles, especially mica particles or glass particles with a coating. In specific embodiments, the particles comprise glass particles having a coating. It appears that such particles have better properties, such as in terms of reflection, especially specular reflection, than metal flakes. Such particles tend to provide a relative higher diffuse reflection.

However, especially the glass or mica particles, especially the glass particles, may have a coating comprises one or more of a metal coating and a metal oxide coating. Metal coatings may e.g. be selected from aluminum, silver, gold, etcetera. Metal oxide coatings may e.g. include tin oxide, titanium oxide, etcetera. Especially, the plate-like particles comprise one or more of mica flakes and glass flakes, wherein the plate-like particles may especially have a metal coating. Therefore, in specific embodiments the particles comprise glass flakes. In further specific embodiments, the particles comprise silver or aluminum coated glass particles. In yet further specific embodiments the particles comprise mica flakes. In further specific embodiments, the particles comprise silver or aluminum coated mica flakes. Hence, in embodiments the particles comprise silver or aluminum coated mica or glass particles.

In specific embodiments, also combinations of different type of particles may be used.

In specific embodiments, the 3D printable material (and thus 3D printed material) comprises one or more of polystyrene (PS), polycarbonate (PC), (amorphous) polyethylenetelepthalate (PET), polymethylmethacrylate (PMMA), etc., and copolymers, such as copolyesters, of two or more thereof.

In specific embodiments, the 3D printable material comprises up to 40 wt% of the plate-like particles, relative to the total weight of the 3D printable material (including the particles). Even more especially, the 3D printable material comprises in the range of 0.1-10 wt%, such as 0.5-10 wt% of the plate-like particles, relative to the total weight of the 3D printable material of the particles, yet even more especially the 3D printable material comprises in the range of 0.1-5 wt%, such as especially 1-5 wt% of the plate-like particles, relative to the total weight of the 3D printable material of the particles. Hence, in embodiments the particles are available up to 40 wt%, such as 0.1-10 wt%, such as 0.5-10 wt%, like at maximum 5 wt%, relative to the total weight of the 3D printable material (or printed material, see also below). With higher percentages, the 3D printable may be difficult to process, and with lower percentages the optical effects may be considered too small.

Therefore, specific embodiments, the 3D printed material comprises up to 40 wt% of the particles, relative to the total weight of the 3D printed material. Even more especially, the 3D printed material comprises in the range of 0.5-10 wt% of the particles, relative to the total weight of the 3D printed material, yet even more especially the 3D printed material comprises in the range of 0.1-10 wt%, like especially 0.1-5 wt%, such as such as 1-5 wt% of the particles, relative to the total weight of the 3D printed material (including the particles).

In specific embodiments, it is also possible to include colorants such as dyes as well as luminescent dyes to obtain enhanced effects.

The flake like particles may be available all over the 3D printed material of the item. However, for reducing the optical defect line visibility, it may only be necessary to include in part of the 3D printed item, i.e. the part that was first deposited on the substrate, contains the flake-like particles as defined herein. Hence, not necessarily all 3D printed material of the 3D items comprises the flake-like particles.

Therefore, the invention also provides embodiments of the method wherein the 3D printable material comprises the plate-like particles when 3D printing on a substrate and wherein the 3D printable material optionally comprises the plate-like particles when 3D printing on already 3D printed material. Hence, only during part of the printing stage the 3D printable material comprises the flake-like particles as defined herein. In other parts of the printing stage the 3D printable material may also comprise these particles, but may also comprise particles according to other definitions, or comprises no particles.

Hence, in embodiments there is also provided a 3D printed item wherein at least a part of a first layer, herein also indicated as outer layer, of 3D printed material of the 3D printed item comprises the plate-like particles at a first average content c1, and wherein one or more other parts of the 3D printed item comprise the plate like particles at a second average c1, wherein c2/c1≤0.8. The second average content may thus also be zero. The contents may be indicated as weight percentage (wt%) of the plate-like particles in the material relative to the total weight of the material. Even more especially, the invention provides in an aspect a 3D printed item comprising 3D printed material, wherein at least a first layer of the 3D printed material comprises light transmissive polymeric material and wherein the polymeric material has a glass transition temperature, wherein the 3D printed material further comprises plate-like particles, wherein the plate-like particles have a metallic appearance, wherein the plate-like particles have a longest dimension length (L1) selected from the range of 40 µm - 2 mm and a largest thickness (L2) selected from the range of 0.05-20 µm, wherein the first layer is an outer layer, and wherein the first layer comprises a repetitive arrangement of the (polymer comprising) plate-like particles. The outer layer at least partly comprises a replicated surface of the substrate that was used for printing the item, essentially without characteristic structure of ribs. Hence, one or more parts of the surface of the 3D printed item may include the ribs, leading to mechanical defect lines, as known in the art. However, the part of the 3D printed item that was in contact with the substrate may essentially not have such mechanical defect lines, as, due to the heating, the substrate surface is replicated in the outer layer of the 3D item. Hence, an outer layer of the 3D printed item comprises light transmissive polymeric material with the particles embedded therein. Hence, a part of the total number of particles may be visible through the light transmissive material. Hence, the 3D printed item may have an outer layer which has metallic appearance. In the outer layer of the 3D printed item, the largest surfaces of the particles may substantially aligned parallel to the outer layer surface (or first layer surface).

To obtain such items, different types of 3D printable materials may be used. For instance, a 3D printer with two or more printing heads maybe applied. Alternatively or additionally, the same printer head may be applied, but the different materials are printed consecutively.

Hence, there is also provided a 3D printable material comprising a polymer with plate-like particles embedded therein, wherein the polymer comprises a thermoplastic material, wherein the plate-like particles have a metallic appearance, wherein the plate-like particles have a longest dimension length (L1) selected from the range of 50 µm - 2 mm and a largest thickness (L2) selected from the range of 0.05-20 µm. Especially, the polymer comprises up to 40 wt% of the plate-like particles, relative to the total weight of the 3D printable material. Further specific embodiments of the 3D printable material may be derived elsewhere herein, wherein e.g. embodiments in relation to the method or 3D item are described.

The (with the herein described method) obtained 3D printed item may be functional per se. According to the invention, the 3D printed item is a reflector. The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such a mirror, a light source (like a LED), etc. The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etcetera. Alternatively or additionally, the functional component may comprise a thermal component (e.g. configured to cool or to heat an electrical component). Hence, the functional component may be configured to generate heat or to scavenge heat, etcetera.

According to the invention, the 3D printed item is a reflector. The substrate used has a shape of a reflector on which the layer has been provided first, and thereafter on the layer the 3D printed material has been provided. Therefore, the invention provides a reflector comprising a reflective surface, especially a specular reflective surface, wherein the reflector comprises the 3D printed item as defined herein, and wherein at least part of the reflective surface is provided by the 3D printed item. Therefore, in specific embodiments of the method of the invention, the substrate has the shape of a reflector with one or more of a curved face, a facetted face, and faces configured relative to each under an angle. In embodiments the reflective surface comprises one or more of a curved face, a facetted face, and faces configured relative to each under an angle. In embodiments, the reflector is a collimator or a parabolic mirror. Hence, types of reflectors include but are not limited to ellipse shaped reflectors (e.g. for converging rays), parabola shaped reflectors (e.g. for making parallel rays), hyperbola-shaped reflectors (for diverging rays), etcetera. Hence, in embodiments the surface of the outer layer may also have the texture of lenslets (small lenses) or may have scratched micro structures, etc.

The reflector may also be used in a lighting system. Hence, the invention provides in yet a further aspect a lighting system comprising (a) a light source configured to generate light source light and (b) a reflector as defined herein configured to (specularly) reflect at least part of said light source light.

Hence, the substrate may especially be flat, but may in other embodiments also have a curved or a facetted face. Therefore, in embodiments the invention also provides a method comprising printing during the printing stage said 3D printable material on a substrate, wherein the substrate has one or more of a curved face, a facetted face, and faces configured relative to each under an angle.

Returning to the 3D printing process, a 3D printer is used to provide the 3D printed item described herein. The 3D printer is a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1b schematically depict some general aspects of the 3D printer;
Figs. 2a-2d schematically depict some aspects of the particles, such as flakes, that can be used herein;
Figs. 3a-3d schematically depict some applications, including 3D printed items;
Figs. 4a-4d further schematically depict some applications, including 3D printed items; and
Fig. 5 schematically depicts some further aspects.

The schematic drawings are not necessarily to scale.

### DETAILED DESCRIPTION OF THE EMBODIMENTS

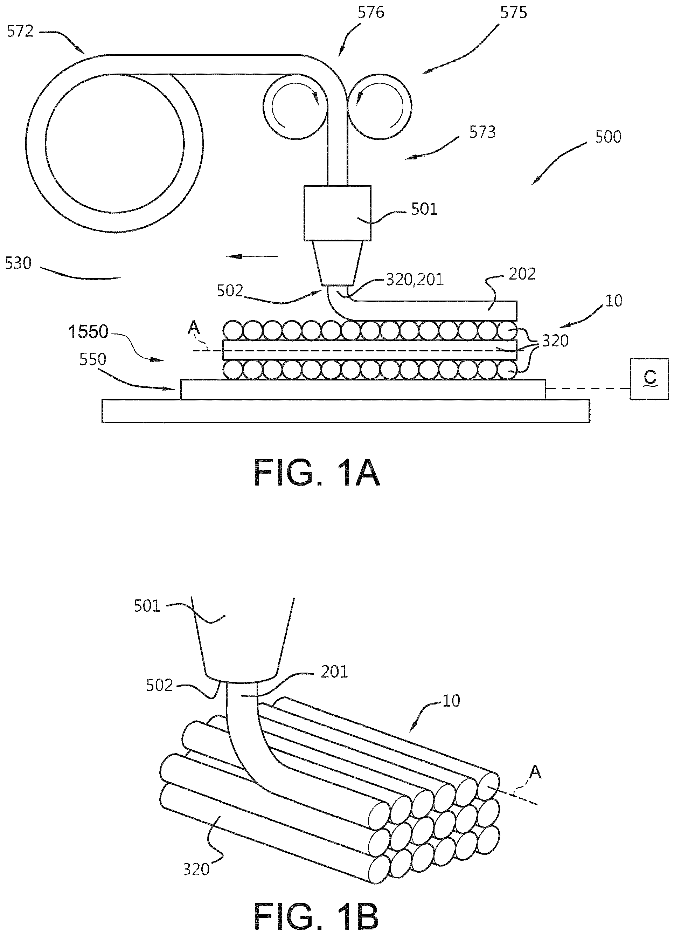

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as a FDM 3D printer head is schematically depicted. Reference 501 indicates the printer head. The 3D printer of the present invention may especially include a plurality of printer heads, though other embodiments are also possible. Reference 502 indicates a printer nozzle. The 3D printer of the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance for the present invention (see further also below).

The 3D printer 500 is configured to generate a 3D item 10 by depositing on a substrate 1550, such as a receiver item 550, which may in embodiments at least temporarily be heated and cooled, a plurality of filaments 320 wherein each filament 20 comprises 3D printable material, such as having a melting point Tₘ. The 3D printer 500 is configured to heat the filament material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire. The 3D printer 500 transforms this in a filament or fiber 320 on the substrate 1550 or on already deposited printed material. In general, the diameter of the filament downstream of the nozzle is reduced relative to the diameter of the filament upstream of the printer head. Hence, the printer nozzle is sometimes (also) indicated as extruder nozzle. Arranging filament by filament and filament on filament, a 3D item 10 maybe formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the substrate 1550. The control system C may include a heater which is able to heat the substrate 1550 to at least a temperature of 50 °C, but especially up to a range of about 350 °C, such as at least 200 °C.

Fig. 1b schematically depicts in 3D in more detail the printing of the 3D item 10 under construction. Here, in this schematic drawing the ends of the filaments 320 in a single plane are not interconnected, though in reality this may in embodiments be the case.

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 320 comprising 3D printable material 201 to the first printer head 501, and optionally (c) a substrate 1550. In Figs. 1a-1b, the first or second printable material or the first or second printed material are indicated with the general indications printable material 201 and printed material 202.

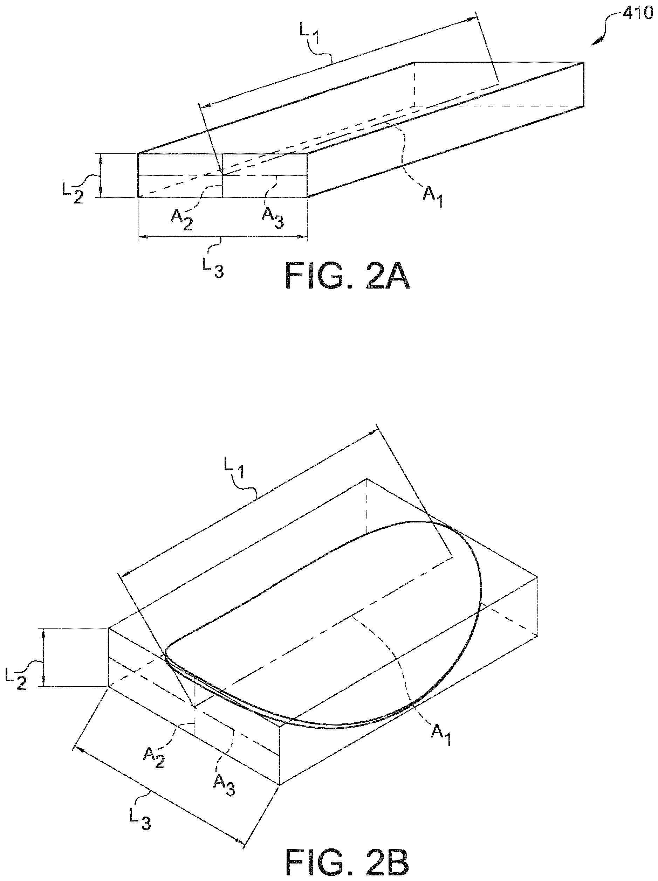

Figs 2a-2d schematically depict some aspects of the particles 410. Some particles 410 have a longest dimension A1 having a longest dimension length L1 and a minor axis A2 having a minor axis length L2. As can be seen from the drawings, the longest dimension length L1 and the minor axis length L2 have a first aspect ratio larger than 1. Fig. 2a schematically depicts a particle 410 in 3D, with the particle 410 having a length, height and width, with the particle (or flake) essentially having an elongated shape. Hence, the particle may have a further (minor or main) axis, herein indicated as further axis A3. Essentially, the particles 410 are elongated thin particles, i.e. L2<L1, especially L2<<L1, and L2<L3, especially L2<<L3. L1 may e.g. be selected from the range of 1-500 µm; likewise L3 may be. L2 may e.g. be selected from the range of 0.1 µm - 10 µm. Also L3 may e.g. be selected from the range of 0.1 µm - 10 µm. However, L2 and/or L3 may also be longer, such as up to 5 mm, such as up to 1 mm, like up to 100 µm.

Fig. 2b schematically depicts a particle that has a less regular shape such as pieces of broken glass, with a virtual smallest rectangular parallelepiped enclosing the particle.

Note that the notations L1, L2, and L3, and A1, A2 and A3 are only used to indicate the axes and their lengths, and that the numbers are only used to distinguish the axis. Further, note that the particles are not essentially oval or rectangular parallelepiped. The particles may have any shape with at least a longest dimension substantially longer than a minor axis or minor axes, and which may essentially be flat. Especially, particles are used that are relatively regularly formed, i.e. the remaining volume of the fictive smallest rectangular parallelepiped enclosing the particle is small, such as less than 50%, like less than 25%, of the total volume.

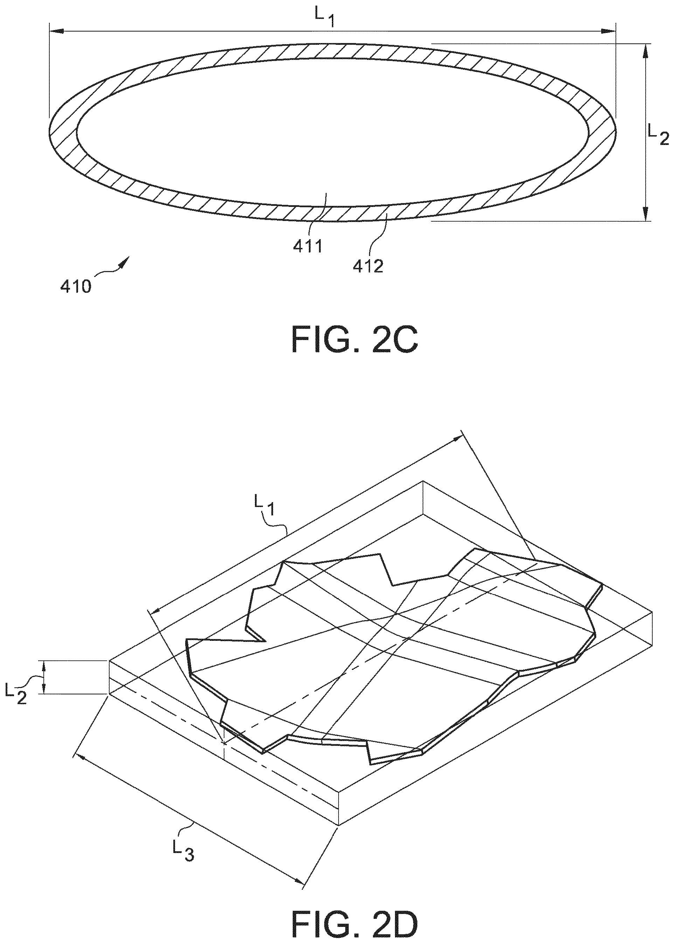

Fig. 2c schematically depicts in cross-sectional view a particle 410 including a coating 412. The coating may comprise light reflective material. For instance, the coating may comprise a (white) metal oxide. In other embodiments, the coating may essentially consist of a metal, such as an Ag coating. In other embodiments the coatings may only be on one or both of the large surfaces and not on the thin side surfaces of the particles.

Fig. 2d schematically depicts a relatively irregularly shaped particle. The particulate material that is used may comprise e.g. small broken glass pieces. Hence, the particulate material that is embedded in the 3D printable material or is embedded in the 3D printed material may include a broad distribution of particles sizes.

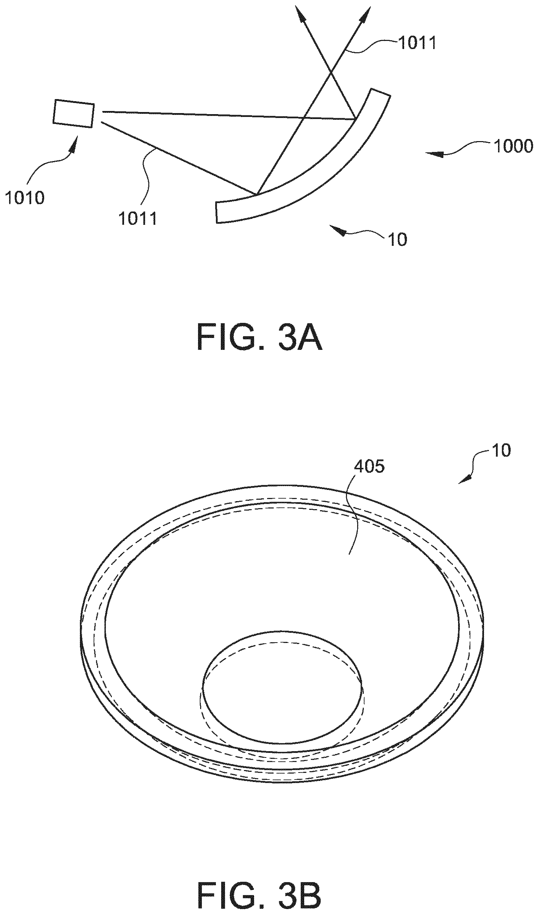

Fig. 3a schematically depicts a lighting system 1000 comprising a) a light source 1010 configured to generate light source light 1011 and b) a reflector 1, such as defined above, configured to reflect at least part of said light source light 1011.

In yet another embodiment, the reflector shaped substrate(s) can produce reflectors with 10, 25 and 40 degrees full width half maximum. In an embodiment, the reflector shaped support may thus have the shape and smoothness of a smooth reflector (see e.g. Fig. 3b, wherein schematically a reflector is depicted, with a (specular) reflective surface 405, such as a specular reflective surface). In another embodiment, the reflector shaped table might have the shape and smoothness of a faceted reflector . The facets may have areas of larger than 16 mm², such as in the range of 16-1600 mm². However, the facets may also be smaller, such as in the range of 1-16 mm², or even smaller, such as in the range of 0.01-1 mm². Such fine facets or structures provide smoother beams.

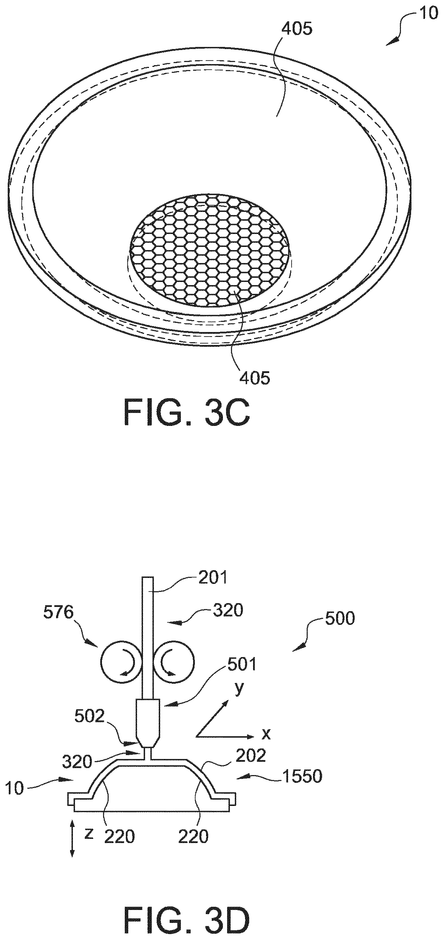

In yet another embodiment, we suggest a reflector shaped table which has a shape and smoothness of a spiral faceted reflector. The fine facets in a tight spiral are desired to achieve a smooth beam. In yet another embodiment, we suggest a reflector shaped table which has a shape and smoothness of a hybrid reflector . It comprises facets near the light source in order to obtain a beam without a "black hole" (see Fig. 3c). More remote from the light source, the reflector may not be facetted. In yet another embodiment, we suggest a reflector shaped table which has a shape and smoothness of an engineered structure including but not limited to including a "textured", "orange peel" and "stochastic" design. Hence, essentially any reflector 1 may include one or more 3D parts comprising the herein described 3D item 10 having reflective properties. Hence, parts of the reflectors 1 in Figs. 3b-3c are 3D printed, and include the 3D item 10.

For printing lamps and luminaires, we suggest the use of a reflector shape which is placed on the print platform. The reflector shape is in this example used as substrate 1550. Note that other shapes, including textured shapes, may be applied as well. Subsequently, the printer can print on top of such a surface of the substrate 1550, replicating the shape and surface texture thereof (Fig. 3d). Reference 220 indicates the surface of the 3D item 10 (under construction) that is in contact with the substrate 1550.

Here we suggest using metal and or glass flakes with a metal or a metal oxide coating. Such glass flakes show specular reflection and act as small mirrors. Here we suggest using glass flakes with a metal, metal oxide coating. For obtaining glitter effect the flakes have an aspect ratio (size/thickness) of 20 or larger. The average size of the flakes is in the range 20 µm-1mm. The flakes can be brought into a polymer such as PC, PMMA, and PET at a concentration up to 40wt%. The host polymer is preferentially a transparent polymer. It is also possible to combine with dyes to maintain glittering effect without inducing scattering. In may also comprise a luminescent or absorbing dye.

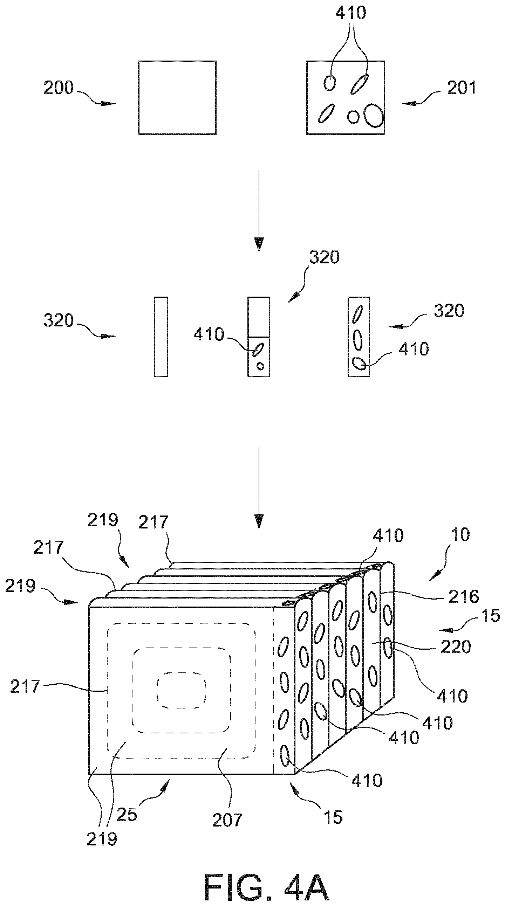

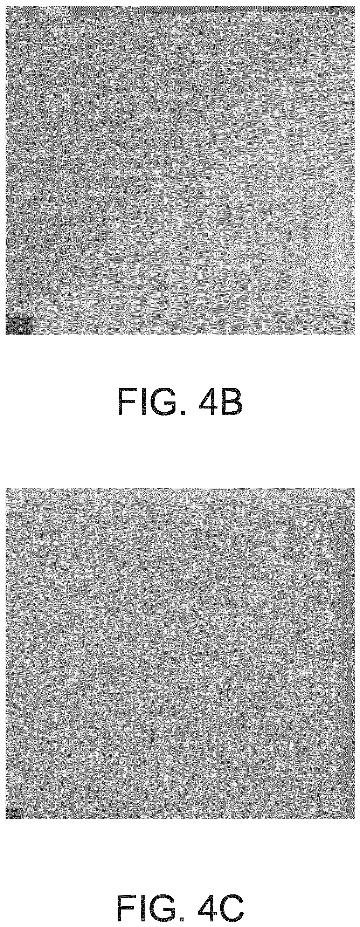

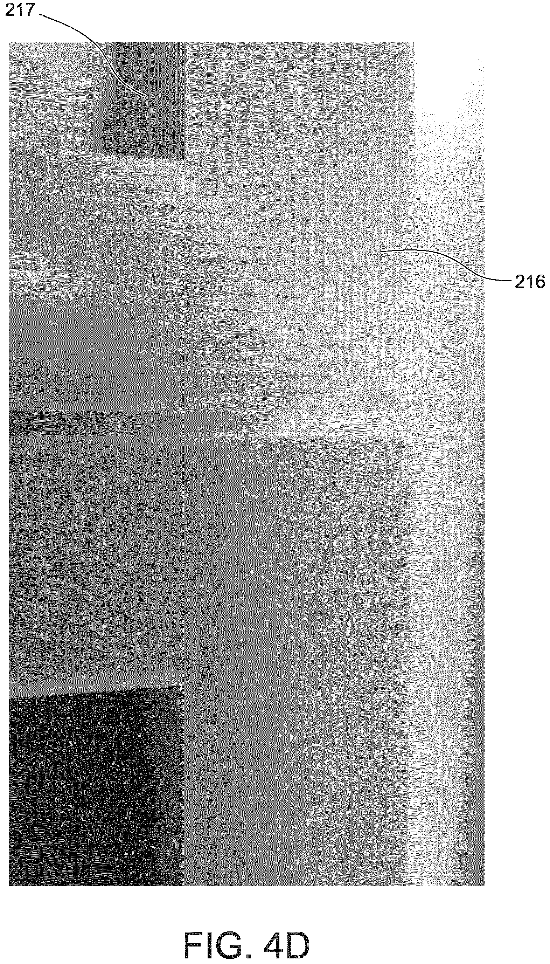

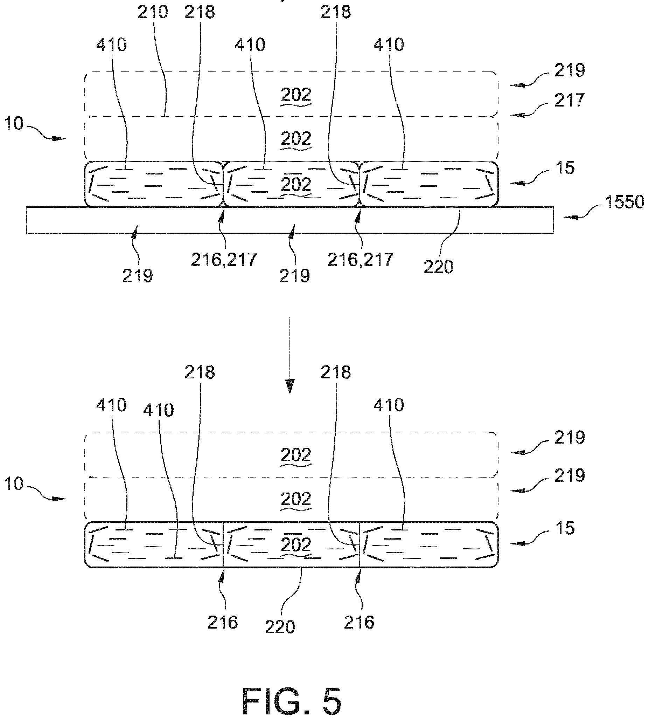

Fig. 4a very schematically depicts an embodiment as well as variants of the 3D printing process, wherein by way of example printable material 201 without plate like particles 401 (left) and with such particles (right) is provided. Such materials may be provided as filament or mixture to the printer head(s), whereby filaments 320 may be produced, of which some options are schematically depicted, with from left to right: filament 320 without plate-like particles, filament 320 with part comprising plate like particles 410 and with part without such particles (of course, a plurality of such different regions may be available), and a filament 320 with plate like particles 401. One or more of such type of filaments may be used for printing, either with a single printer head or with two or more printer heads, and provide a 3D printed item 10. Here, by way of example part of the item does not comprise the herein defined plate like particles. This part is indicated with reference 25. However, another part, herein indicated as outer layer 15, does comprise the particle 410. Here, this is by way of example the right side face, which was thus the part of the 3D item 10 that was first deposited on the substrate. As indicated above, the item 1, or at least part thereof is heated on the substrate. The outer surface of the item 10 that was in contact with the surface is - due to the heating to about or (slightly) above the glass transition temperature, essentially become conformal to the shape of the substrate. Assuming a flat substrate, a flat outer layer is obtained, as schematically depicted in Fig. 4a. Hence, the characteristic rib structure with ribs 19 which is often seen for 3D printed items 10, is essentially not present in this outer layer. However, such layers above the outer layer that was in contact with the substrate, and outer layers that were not in contact with the substrate, may include such ribs 19. This leads to elongated shallow cavities 217. These are herein also indicated as mechanical defect lines 217. Reference 216 refers to optical defect lines, which are further explained in relation to Fig. 5. Reference 220 refers to a surface of the 3D item 10, especially to the surface of the outer layer 15. This surface may thus have a shape essentially conformal to the earlier used substrate during 3D printing. Fig. 4d shows a comparison in one photo of the examples shown in Figs. 4b and 4c.

Hence, printing starts always by deposition of layers on a flat platform, here indicate with the broader term "substrate". The area printed on the platform can form the front decorative surface of a luminaire. Objects showing metallic appearance are highly appreciated. For this purpose one can make use of polymers filled with plate like particles with a metallic appearance such as metal flakes. During the deposition using FDM printing metallic flakes can get oriented within the polymer, parallel to the surface showing metallic appearance. However when such layers are placed next to each other to produce a flat surface, optical defect lines start to appear in regions between the subsequently deposited layers next to each other. In order to avoid the appearance of mechanical defect lines it is important to heat up the platform to a temperature close or above the glass transition temperature of the polymer. Fig. 4b shows such optical defect lines obtained during the printing of a polymer containing A1 flakes with (lateral) dimensions about 20 micron on a flat platform. Such optical defect lines tend to disturb uniform metallic appearance of the surface. It was surprisingly found that the visibility of the optical defect lines is very much related to the size of the metal particles. We used various plate-shaped particles which were disc or flake shaped ranging from 20 µm and up. When particles with lateral dimensions up to around 100 µm were used optical defects were clearly visible. When particles with larger dimensions were used the optical defect lines became less visible. When particles with lateral dimensions above 200 µm were used optical defect lines totally disappeared. Over about 1-2 mm, the surface texture may become too rough or particles may protrude from the surface. Figure 4c shows a photo obtained after the printing of a polycarbonate containing 4% A1 dollar type flakes with dimensions about 240 µm on a flat platform which was heated to 150 °C through a printer nozzle (at 290 °C with a diameter of 1.8 mm. In Fig. 4c it can be seen that the optical defect lines disappear. Fig. 4d shows a comparison in a single figure of the same items as shown in Figs. 4b and 4c, respectively. In fig. 4d, also optical defect lines 216 are depicted, which are due to some orientation of the particles at interfaces of two 3D printed filaments. Hence, even though the ribbed structure may be removed due to heating of the substrate, a kind of "ribbed" structure is still visible due to the orientation of the particles within the printed filaments. However, these optical defect lines 216 are hardly visible in the lower embodiment shown in Fig. 4d (and also shown in Fig. 4c).

Hence, it is herein suggest using transparent polymer containing plate like particles with a metallic appearance having lateral dimensions larger than 40 µm, especially larger than about 100 µm for using FDM to obtain metallic appearance without optical defects upon printing on a flat surface. Such polymers may also contain other additives such as colorants. Plate like particles may be metal flake such as aluminum, copper, nickel etc. They may also have disc like shape such as so-called dollar shape, or coin shape.

Fig. 5 schematically depicts a few layers of 3D printed material 200 on the substrate 1550. The structure with ribs 219, and mechanical defect lines 217 is shown at the edges and on the substrate. Upon heating the substrate, these mechanical defect lines 217 essentially disappear at the surface 220 of the first layer 15. Hence, here a flat surface 220 of the outer layer 15 is shown, as this part of the external surface of the 3D printed item 10 was in contact with the substrate 1550.

As shown in Fig. 5, there is a repetitive arrangement with an orientation of the particles 410 at the (original) boundaries between filaments that were deposited adjacent to each other. As the polymeric material is light transmissive, and thus the particles 410 are visible through the polymeric material, this orientation lead to optical defect lines 216.

The term "substantially" herein, such as "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The various aspects discussed in this patent can be combined in order to provide additional advantages. Further, the person skilled in the art will understand that embodiments can be combined, and that also more than two embodiments can be combined.

It goes without saying that one or more of the first (printable or printed) material and second (printable or printed) material may contain fillers such as glass and fibers which do not have (to have) influence on the on T_{g} or Tₘ of the material(s).

## Claims

1. A method for manufacturing a reflector by 3D printing on a substrate (1550), the method comprising providing a filament (320) of 3D printable material (201) and printing during a printing stage the 3D printable material (201), to provide said reflector (1) comprising 3D printed material (202), **characterized in that** the 3D printable material (201) comprises light transmissive polymeric material, wherein the polymeric material has a glass transition temperature, wherein the 3D printable material during at least part of the printing stage further comprises plate-like particles (410), wherein the plate-like particles (410) have a metallic appearance, wherein the plate-like particles (410) have a longest dimension length (L1) selected from the range of 40 µm - 2 mm and a largest thickness (L2) selected from the range of 0.05-20 µm, and wherein the method further comprises at least temporarily heating the substrate (1550) to a temperature of at least 5 °C above the glass transition temperature at least during deposition and/or after deposition of a first layer of 3D printable material on the substrate executed until essentially the deposited first layer is conformal with the substrate.

2. The method according to claim 1, wherein the plate-like particles (410) have a longest dimension length (L1) selected from the range of 100 µm - 1 mm and a largest thickness (L2) selected from the range of 0.10-10 µm, and wherein the plate-like particles (410) comprise one or more of dollar like particles, flake-like particles, and particles with straight edges.

3. The method according to any one of the preceding claims, wherein the method comprises at least temporarily heating the substrate (1550) to a temperature below the melting temperature.

4. The method according to any one of the preceding claims, wherein the 3D printable material (201) comprises in the range of 0.1-5 wt% of the plate-like particles (410), relative to the total weight of the 3D printable material (201).

5. The method according to any one of the preceding claims, wherein the 3D printable material (201) comprises one or more of polystyrene (PS), polycarbonate (PC), polyethylenetelepthalate (PET), polymethylmethacrylate (PMMA), and copolymers of two or more of these, and wherein the particles (410) comprise one or more of metal particles and metal coated particles, wherein the metal coated particles comprise silver or aluminum coated mica particles or glass particles.

6. The method according to any one of the preceding claims, wherein the 3D printable material (201) comprises the plate-like particles (410) when 3D printing on a substrate (1550) and wherein the 3D printable material (201) optionally comprises the plate-like particles (410) when 3D printing on already 3D printed material (202).

7. The method according to any one of the preceding claims, the method comprising printing during the printing stage said 3D printable material (201) on a substrate (1550), wherein the substrate (1550) has one or more of a curved face, a facetted face, and faces configured relative to each under an angle.

8. A 3D printed reflector (1), **characterized in that** said reflector is obtainable by a method according to any one of the preceding claims, wherein the 3D printed reflector (1) comprises 3D printed material (202), wherein at least a first layer (15) of the 3D printed material (202) comprises light transmissive polymeric material, wherein the polymeric material has a glass transition temperature, wherein the 3D printed material (202) further comprises plate-like particles (410), wherein the plate-like particles (410) have a metallic appearance, wherein the plate-like particles (410) have a longest dimension length (L1) selected from the range of 40 µm - 2 mm and a largest thickness (L2) selected from the range of 0.05-20 µm, wherein the first layer (15) is an outer layer, and wherein the first layer (15) comprises a repetitive arrangement of the polymer comprising plate-like particles (410).

9. The 3D printed reflector (1) according to claim 8, wherein the particles (410) having a coating (412), wherein the coating (410) comprises one or more of a metal coating and a metal oxide coating, and wherein the plate-like particles (410) have a longest dimension length (L1) selected from the range of 100 µm - 1 mm and a largest thickness (L2) selected from the range of 0.10-10 µm.

10. The 3D printed reflector (1) according to any one of the preceding claims 8-9, wherein the 3D printed material (202) comprises up to 40 wt% of the plate-like particles (410), relative to the total weight of the3D printed material (202).

11. The 3D printed reflector (1) according to any one of the preceding claims 8-10, wherein the 3D printed material (202) comprises in the range of 0.1-5 wt% of the plate-like particles (410), relative to the total weight of the3D printed material (202), wherein the 3D printed material (202) comprises one or more of polystyrene (PS), polycarbonate (PC), polyethylenetelepthalate (PET), polymethylmethacrylate (PMMA), and copolymers of two or more of these, and wherein the plate-like particles (410) comprise one or more of metal flakes, coated mica flakes, and coated glass flakes.

12. The 3D printed reflector (1) according to any one of the preceding claims 8-11, wherein at least a part of the first layer (15) of 3D printed material (202) of the 3D printed reflector (1) comprises the plate-like particles (410) at a first average content c1, and wherein one or more other parts of the 3D printed reflector (1) comprise the plate like particles (410) at a second average c1, wherein c2/c1≤0.8.

13. The 3D printed reflector (1) according to any one of the preceding claims 8-12, wherein the reflector is an ellipse-shaped reflector, a parabola-shaped reflector, or a hyperbola-shaped reflector.

14. A lighting system (1000) comprising (a) a light source (1010) configured to generate light source light (1011) and (b) a reflector (1) according to any one of claims 8 to 13 configured to reflect at least part of said light source light (1011).

## Patentansprüche

1. Verfahren zum Anfertigen eines Reflektors durch 3D-Drucken auf einem Substrat (1550), wobei das Verfahren das Bereitstellen eines Filaments (320) aus 3D-druckbarem Material (201) und das Drucken während einer Druckstufe des 3D-druckbaren Materials umfasst, um den Reflektor (1) bereitzustellen, der 3D-gedrucktes Material (202) umfasst, **dadurch gekennzeichnet, dass** das 3D-druckbare Material (201) Licht durchlässiges Polymermaterial umfasst, wobei das Polymermaterial eine Glasübergangstemperatur aufweist, wobei das 3D-druckbare Material während mindestens eines Teils der Druckstufe weiter plattenähnliche Teilchen (410) umfasst, wobei die plattenähnlichen Teilchen (410) ein metallisches Aussehen aufweisen, wobei die plattenähnlichen Teilchen (410) eine Länge mit längstem Maß (L1) aufweisen, die aus dem Bereich von 40 µm bis 2 mm ausgewählt ist, und eine größte Stärke (L2), die aus dem Bereich von 0,05 bis 20 µm ausgewählt ist, und wobei das Verfahren weiter mindestens vorübergehend das Erhitzen des Substrats (1550) auf eine Temperatur von mindestens 5 °C oberhalb Glasübergangstemperatur mindestens während der Abscheidung und/oder nach der Abscheidung einer ersten Schicht aus 3D-druckbaren Material auf dem Substrat umfasst, die ausgeführt wird, bis die abgeschiedene erste Schicht im Wesentlichen mit dem Substrat formangeglichen ist.

2. Verfahren nach Anspruch 1, wobei die plattenähnlichen Teilchen (410) eine Länge mit längstem Maß (L1) aufweisen, die aus dem Bereich von 100 µm bis 1 mm ausgewählt ist, und eine größte Stärke (L2), die aus dem Bereich von 0,10 bis 10 µm ausgewählt ist, und wobei die plattenähnlichen Teilchen (410) eines oder mehrere von dollarähnlichen Teilchen, flockenähnlichen Teilchen und Teilchen mit geraden Kanten umfassen.

3. Verfahren nach einem der vorstehenden Ansprüche, wobei das Verfahren mindestens vorübergehend das Erhitzen des Substrats (1550) auf eine Temperatur unter der Schmelztemperatur umfasst.

4. Verfahren nach einem der vorstehenden Ansprüche, wobei das 3D-druckbare Material (201) in dem Bereich von 0,1 bis 5 Gew.-% an plattenähnlichen Teilchen (410) bezogen auf das Gesamtgewicht des 3D-druckbaren Materials (201) umfasst.

5. Verfahren nach einem der vorstehenden Ansprüche, wobei das 3D-druckbare Material (201) eines oder mehrere von Polystyrol (PS), Polycarbonat (PC), Polyethylenterephthalat (PET), Polymethylmethacrylat (PMMA) und Copolymere aus zwei oder mehreren dieser umfasst, und wobei die Teilchen (410) eines oder mehrere von Metallteilchen und metallbeschichteten Teilchen umfassen, wobei die metallbeschichteten Teilchen silber- oder aluminiumbeschichtete Mikateilchen oder Glasteilchen umfassen.

6. Verfahren nach einem der vorstehenden Ansprüche, wobei das 3D-druckbare Material (201) die plattenähnlichen Teilchen (410) beim 3D-Drucken auf einem Substrat (1550) umfasst, und wobei das 3D-druckbare Material (201) optional die plattenähnlichen Teilchen (410) beim 3D-Drucken auf bereits 3D-gedrucktem Material (202) umfasst.

7. Verfahren nach einem der vorstehenden Ansprüche, wobei das Verfahren das Drucken während der Druckstufe des 3D-druckbaren Materials (201) auf einem Substrat (1550) umfasst, wobei das Substrat (1550) eine oder mehrere einer gekrümmten Fläche, einer Facettenfläche und Flächen, die zueinander unter einem Winkel konfiguriert sind, aufweist.

8. 3D-gedruckter Reflektor (1), **dadurch gekennzeichnet, dass** der Reflektor durch ein Verfahren nach einem der vorstehenden Ansprüche erhaltbar ist, wobei der 3D-druckbare Reflektor (1) 3D-gedrucktes Material (202) umfasst, wobei mindestens eine erste Schicht (15) des 3D-gedruckten Materials (202) Licht durchlässiges Polymermaterial umfasst, wobei das Polymermaterial eine Glasübergangstemperatur aufweist, wobei das 3D-gedruckte Material (202) weiter plattenähnliche Teilchen (410) umfasst, wobei die plattenähnlichen Teilchen (410) ein metallisches Aussehen aufweisen, wobei die plattenähnlichen Teilchen (410) eine Länge mit längstem Maß (L1) aufweisen, die aus dem Bereich von 40 µm bis 2 mm ausgewählt ist, und eine größte Stärke (L2), die aus dem Bereich von 0,05 bis 20 µm ausgewählt ist, wobei die erste Schicht (15) eine Außenschicht ist, und wobei die erste Schicht (15) eine wiederholte Anordnung der Polyester umfassenden plattenähnlichen Teilchen (410) umfasst.

9. 3D-gedruckter Reflektor (1) nach Anspruch 8, wobei die Teilchen (410) eine Beschichtung (412) aufweisen, wobei die Beschichtung (410) eine oder mehrere einer Metallbeschichtung und einer Metalloxidbeschichtung umfasst, und wobei die plattenähnlichen Teilchen (410) eine Länge mit längstem Maß (L1) aufweisen, die aus dem Bereich von 100 µm bis 1 mm ausgewählt ist, und eine größte Stärke (L2), die aus dem Bereich von 0,10 bis 10 µm ausgewählt ist.

10. 3D-gedruckter Reflektor (1) nach einem der Ansprüche 8 bis 9, wobei das 3D-gedruckte Material (202) bis zu 40-Gew.-% der plattenähnlichen Teilchen (410) in Bezug auf das Gesamtgewicht an 3D-gedrucktem Material (202) umfasst.

11. 3D-gedruckter Reflektor (1) nach einem der vorstehenden Ansprüche 8 bis 10, wobei das 3D-gedruckte Material (202) in dem Bereich von 0,1 bis 5-Gew.-% der plattenähnlichen Teilchen (410) in Bezug auf das Gesamtgewicht an 3D-gedrucktem Material (202) umfasst, wobei das 3D-gedruckte Material (202) eines oder mehrere aus Polystyrol (PS), Polycarbonat (PC), Polyethylenterephthalat (PET), Polymethylmethacrylat (PMMA) und Copolymere von zwei oder mehreren dieser umfasst, und wobei die plattenähnlichen Teilchen (410) eine oder mehrere von Metallflocken, beschichteten Mikaflocken und beschichteten Glasflocken umfassen.

12. 3D-gedruckter Reflektor (1) nach einem der vorstehenden Ansprüche 8 bis 11, wobei mindestens ein Teil der ersten Schicht (15) an 3D-gedrucktem Material (202) des 3D-gedruckten Reflektors (1) die plattenähnlichen Teilchen (410) mit einem ersten mittleren Inhalt cl umfasst, und wobei ein oder mehrere andere Teile des 3D-gedruckten Reflektors (1) die plattenähnlichen Teilchen (410) mit einem zweiten mittleren Inhalt c1 umfassen, wobei c2:c1 ≤ 0,8 ist.

13. 3D-gedruckter Reflektor (1) nach einem der vorstehenden Ansprüche 8 bis 12, wobei der Reflektor ein ellipsenförmiger Reflektor, ein parabelförmiger Reflektor oder ein hyperbelförmiger Reflektor ist.

14. Beleuchtungssystem (1000), das (a) eine Lichtquelle (1010) umfasst, die dazu konfiguriert ist, Lichtquellenlicht (1011) zu erzeugen, und (b) einen Reflektor (1) nach einem der Ansprüche 8 bis 13, der dazu konfiguriert ist, mindestens einen Teil des Lichtquellenlichts (1011) zu reflektieren.

## Revendications

1. Procédé de fabrication d'un réflecteur par impression 3D sur un substrat (1550), le procédé comprenant la fourniture d'un filament (320) de matériau imprimable en 3D (201) et l'impression pendant une étape d'impression du matériau imprimable en 3D (201), pour fournir ledit réflecteur (1) comprenant un matériau imprimé en 3D (202), **caractérisé en ce que** le matériau imprimable en 3D (201) comprend un matériau polymérique transmettant la lumière, dans lequel le matériau polymérique a une température de transition vitreuse, dans lequel le matériau imprimable en 3D pendant au moins une partie de l'étape d'impression comprend en outre des particules de type plaque (410), dans lequel les particules de type plaque (410) ont un aspect métallique, dans lequel les particules de type plaque (410) ont une longueur de dimension la plus longue (L1) choisie dans la plage de 40 µm à 2 mm et une épaisseur la plus grande (L2) choisie dans la plage de 0,05 à 20 µm, et dans lequel le procédé comprend en outre le chauffage au moins temporaire du substrat (1550) jusqu'à une température d'au moins 5 °C au-dessus de la température de transition vitreuse au moins pendant le dépôt et/ou après le dépôt d'une première couche de matériau imprimable en 3D sur le substrat exécuté jusqu'à ce qu'essentiellement la première couche déposée soit conforme au substrat.

2. Procédé selon la revendication 1, dans lequel les particules de type plaque (410) ont une longueur de dimension la plus longue (L1) choisie dans la plage de 100 µm à 1 mm et une épaisseur la plus grande (L2) choisie dans la plage de 0,10 à 10 µm, et dans lequel les particules de type plaque (410) comprennent une ou plusieurs de particules de type dollar, de particules de type paillette, et de particules à bords droits.

3. Procédé selon l'une quelconque des revendications précédentes, dans lequel le procédé comprend le chauffage au moins temporaire du substrat (1550) jusqu'à une température en dessous de la température de fusion.

4. Procédé selon l'une quelconque des revendications précédentes, dans lequel le matériau imprimable en 3D (201) comprend dans la plage de 0,1 à 5 % en poids des particules de type plaque (410), par rapport au poids total du matériau imprimable en 3D (201).

5. Procédé selon l'une quelconque des revendications précédentes, dans lequel le matériau imprimable en 3D (201) comprend un ou plusieurs parmi le polystyrène (PS), le polycarbonate (PC), le polytéréphtalate d'éthylène (PET), le polyméthacrylate de méthyle (PMMA), et des copolymères de deux ou plus de ceux-ci, et dans lequel les particules (410) comprennent une ou plusieurs parmi des particules de métal et des particules revêtues de métal, dans lequel les particules revêtues de métal comprennent des particules de mica ou des particules de verre revêtues d'argent ou d'aluminium.

6. Procédé selon l'une quelconque des revendications précédentes, dans lequel le matériau imprimable en 3D (201) comprend les particules de type plaque (410) lors d'une impression 3D sur un substrat (1550) et dans lequel le matériau imprimable en 3D (201) comprend facultativement les particules de type plaque (410) lors d'une impression 3D sur un matériau déjà imprimé en 3D (202).

7. Procédé selon l'une quelconque des revendications précédentes, le procédé comprenant l'impression pendant l'étape d'impression dudit matériau imprimable en 3D (201) sur un substrat (1550), dans lequel le substrat (1550) a une ou plusieurs parmi une face courbée, une face à facettes, et des faces configurées l'une par rapport à l'autre selon un angle.

8. Réflecteur imprimé en 3D (1), **caractérisé en ce que** ledit réflecteur peut être obtenu par un procédé selon l'une quelconque des revendications précédentes, dans lequel le réflecteur imprimé en 3D (1) comprend un matériau imprimé en 3D (202), dans lequel au moins une première couche (15) du matériau imprimé en 3D (202) comprend un matériau polymérique transmettant la lumière, dans lequel le matériau polymérique a une température de transition vitreuse, dans lequel le matériau imprimé en 3D (202) comprend en outre des particules de type plaque (410), dans lequel les particules de type plaque (410) ont un aspect métallique, dans lequel les particules de type plaque (410) ont une longueur de dimension la plus longue (L1) choisie dans la plage de 40 µm à 2 mm et une épaisseur la plus grande (L2) choisie dans la plage de 0,05 à 20 µm, et dans lequel la première couche (15) est une couche externe, et dans lequel la première couche (15) comprend un agencement répétitif du polymère comprenant des particules de type plaque (410).

9. Réflecteur imprimé en 3D (1) selon la revendication 8, dans lequel les particules (410) ont un revêtement (412), dans lequel le revêtement (410) comprend un ou plusieurs parmi un revêtement en métal et un revêtement en oxyde de métal, et dans lequel les particules de type plaque (410) ont une longueur de dimension la plus longue (L1) choisie dans la plage de 100 µm à 1 mm et une épaisseur la plus grande (L2) choisie dans la plage de 0,10 à 10 µm.

10. Réflecteur imprimé en 3D (1) selon l'une quelconque des revendications 8-9 précédentes, dans lequel le matériau imprimé en 3D (202) comprend jusqu'à 40 % en poids des particules de type plaque (410), par rapport au poids total du matériau imprimé en 3D (202).

11. Réflecteur imprimé en 3D (1) selon l'une quelconque des revendications 8-10 précédentes, dans lequel le matériau imprimé en 3D (202) comprend dans la plage de 0,1 à 5 % en poids des particules de type plaque (410), par rapport au poids total du matériau imprimé en 3D (202), dans lequel le matériau imprimé en 3D (202) comprend un ou plusieurs parmi le polystyrène (PS), le polycarbonate (PC), le polytéréphtalate d'éthylène (PET), le polyméthacrylate de méthyle (PMMA), et des copolymères de deux ou plus de ceux-ci, et dans lequel les particules de type plaque (410) comprennent une ou plusieurs parmi des paillettes de métal, des paillettes de mica revêtues, et des paillettes de verre revêtues.

12. Réflecteur imprimé en 3D (1) selon l'une quelconque des revendications 8-11 précédentes, dans lequel au moins une partie de la première couche (15) de matériau imprimé en 3D (202) du réflecteur imprimé en 3D (1) comprend les particules de type plaque (410) à une première teneur moyenne c1, et dans lequel une ou plusieurs autres parties du réflecteur imprimé en 3D (1) comprennent les particules de type plaque (410) à une seconde teneur moyenne c1, dans lequel c2/c1 ≤ 0,8.

13. Réflecteur imprimé en 3D (1) selon l'une quelconque des revendications 8-12 précédentes, dans lequel le réflecteur est un réflecteur en forme d'ellipse, un réflecteur en forme de parabole, ou un réflecteur en forme d'hyperbole.

14. Système d'éclairage (1000) comprenant (a) une source de lumière (1010) configurée pour générer une lumière de source de lumière (1011) et (b) un réflecteur (1) selon l'une quelconque des revendications 8 à 13 configuré pour réfléchir au moins une partie de ladite lumière de source de lumière (1011).
